# EUROPÄISCHE PATENTSCHRIFT

(11) **EP 2 994 331 B1**
(45) Veröffentlichungstag und Bekanntmachung des Hinweises auf die Patenterteilung: **10.06.2020**
(21) Anmeldenummer: 14721329.2
(22) Anmeldetag: 29.04.2014
(51) Int. Cl.: B60K 37/06, G06F 3/0482

(54) **VERFAHREN ZUM STEUERN EINER ANZEIGEFLÄCHE EINER BEDIENVORRICHTUNG UND BEDIENVORRICHTUNG IN EINEM FAHRZEUG**
METHOD FOR CONTROLLING A DISPLAY SURFACE OF AN OPERATOR CONTROL DEVICE AND OPERATOR CONTROL DEVICE IN A VEHICLE
PROCÉDÉ DE COMMANDE D'UNE ZONE D'AFFICHAGE D'UN DISPOSITIF DE COMMANDE ET DISPOSITIF DE COMMANDE INSTALLÉ DANS UN VÉHICULE

(30) Priorität: 10.05.2013 DE 102013008074
(43) Veröffentlichungstag der Anmeldung: 16.03.2016
(73) Patentinhaber: Volkswagen Aktiengesellschaft, 38440 Wolfsburg (DE)
(72) Erfinder: WENGELNIK, Heino, 38442 Wolfsburg (DE); MEDLER, Andreas, 38268 Lengede (DE)
(86) Internationale Anmeldenummer: PCT/EP2014/058718
(87) Internationale Veröffentlichungsnummer: WO 2014/180715

(56) Entgegenhaltungen:
- WO-A2-2013/053466

## Beschreibung

Die vorliegende Erfindung betrifft ein Verfahren zum Steuern einer Anzeigefläche einer Bedienvorrichtung in einem Fahrzeug. Dabei sind in einem Speicher Daten zu einer Menüstruktur gespeichert, die verschiedene Menüs aufweist, insbesondere Daten zu einer hierarchischen Menüstruktur, die in verschiedenen Ebenen Menüs aufweist. Ferner betrifft die Erfindung ein Bedienvorrichtung in einem Fahrzeug mit einer Anzeigefläche und einem Speicher, in dem die vorstehend genannten Daten gespeichert sind. Die Bedienvorrichtung umfasst ferner eine Steuervorrichtung, die mit dem Speicher und der Anzeigefläche gekoppelt ist und mittels derer Graphikdaten zur Anzeige auf der Anzeigefläche erzeugbar sind. Des Weiteren umfasst die Bedienvorrichtung eine Annäherungserfassungseinrichtung zum Erfassen des Aufenthalts eines Betätigungsobjekts in einem Detektionsbereich.

In einem Fahrzeug gibt es verschiedene Informations- und Kommunikationseinrichtungen, deren Anzeigen und Informationen dargestellt werden müssen. Die Größe der Anzeigeflächen, welche in dem Fahrzeug untergebracht werden können, so dass insbesondere der Fahrer des Fahrzeugs die Anzeigen ablesen kann ist, ist sehr begrenzt. Um daher die vielfältigen Bedien- und Anzeigemöglichkeiten übersichtlich darzustellen, werden z. B. hierarchische Menüstrukturen verwendet. Eine hierarchische Menüstruktur enthält eine Vielzahl von Menüs, denen jeweils verschiedene Menüpunkte, alphanumerische Informationsdarstellungen und/oder Graphiken zugeordnet sind. Bei der Auswahl eines Menüpunkts öffnet sich ein Menü einer tieferen Ebene der hierarchischen Menüstruktur, ein sogenanntes Untermenü. Dieses Untermenü umfasst wiederum mehrere Untermenüpunkte. Diese Struktur kann über mehrere Hierarchieebenen fortgeführt werden, so dass sich eine komplexe Verästelung für die Anzeige auf der Anzeigefläche ergibt.

Trotz der Komplexität der Menüstruktur, soll der Nutzer die Bedienvorrichtung in dem Fahrzeug einfach und intuitiv bedienen können. Ferner besteht das Bedürfnis, Merkmale des Fahrzeugtyps den Fahrzeuginsassen, insbesondere dem Fahrer, zu vermitteln. Es ist beispielsweise bekannt bei einem Fahrzeugtyp mit einem besonders leistungsfähigen Motor, das Interieur und im Zusammenhang damit auch die Anzeigen der Bedienvorrichtung an diesen Fahrzeugtyp anzupassen und ihn von Fahrzeugen der gleichen Baureihe, die jedoch einen weniger leistungsfähigen Motor aufweisen, abzugrenzen. Ferner besteht das Bedürfnis, Fahrzeuge, die einen elektrischen Antriebsmotor für die Fortbewegung mit dem Fahrzeug umfassen, von herkömmlichen Fahrzeugen abzugrenzen.

Aus der DE 10 2011 116 120 A1 ist ein Verfahren zum Bereitstellen einer Bedienvorrichtung in einem Fahrzeug bekannt, bei dem von einer Steuervorrichtung Graphikdaten erzeugt werden, die eine Anzeigefläche so ansteuern, dass mehrere graphische Objekte in zumindest zwei Anzeigemodi darstellbar sind. Des Weiteren ist für die Anzeige auf der Anzeigefläche ein Bedienzustand definiert. Bei dem Verfahren wird eine Annäherung eines Betätigungsobjekts in einen Detektionsbereich vor der Anzeigefläche erfasst und die Steuervorrichtung wechselt von einem Anzeigezustand in den Bedienzustand, wenn das Betätigungsobjekt im Detektionsbereich erfasst wurde.

Die WO 2013/053466 A2 beschreibt ein Verfahren zum Steuern einer Anzeigefläche sowie eine Bedienvorrichtung, wobei grafische Objekte auf einer Anzeigefläche in zumindest zwei Anzeigemodi darstellbar sind, nämlich in einer Reihe oder in einer Matrix angeordnet. Eine Position eines Betätigungsobjekts relativ zu einer Schaltfläche wird erfasst und als Betätigung gewertet. Anschließend wird ein animierter Übergang zwischen den Anzeigemodi dargestellt.

Der vorliegenden Erfindung liegt die Aufgabe zugrunde, ein Verfahren und eine Bedienvorrichtung der eingangs genannten Art bereitzustellen, bei denen dem Benutzer Informationen einer Menüstruktur so angezeigt werden, dass diese Informationen leicht erfassbar sind, gleichermaßen dem Nutzer jedoch auch fahrzeugtypspezifische Informationen vermittelt werden.

Erfindungsgemäß wird diese Aufgabe durch ein Verfahren mit den Merkmalen des Anspruchs 1 und eine Bedienvorrichtung mit den Merkmalen des Anspruchs 6 gelöst. Vorteilhafte Ausgestaltungen und Weiterbildungen ergeben sich aus den abhängigen Ansprüchen.

Bei dem erfindungsgemäßen Verfahren wird der Aufenthalt eines Betätigungsobjekts in einem Detektionsbereich erfasst. Ferner umfassen die Menüs der Menüstruktur eine Teilfläche zur Anzeige von fahrzeugtypspezifischen Informationen. Die Teilfläche mit diesen fahrzeugtypspezifischen Informationen wird bei dem erfindungsgemäßen Verfahren nur dann in dem zugehörigen Menü auf der Anzeigefläche angezeigt oder verändert, wenn erfasst worden ist, dass das Betätigungsobjekt in den Detektionsbereich eintritt oder aus dem Detektionsbereich austritt.

Wenn sich beispielsweise kein Betätigungsobjekt in dem Detektionsbereich befindet und auch kein Eintritt eines solchen Betätigungsobjekts in den Detektionsbereich erfasst wurde, wird die Teilfläche mit den fahrzeugtypspezifischen Informationen auch nicht auf der Anzeigefläche dargestellt. Sobald nun ein Betätigungsobjekt in dem Detektionsbereich eintritt, verändert sich die Darstellung des aktuellen Menüs derart, dass die Teilfläche mit den fahrzeugtypspezifischen Informationen angezeigt wird.

Alternativ kann die Teilfläche mit den fahrzeugtypspezifischen Informationen nur dann angezeigt werden, wenn erfasst worden ist, dass das Betätigungsobjekt aus dem Detektionsbereich austritt. In diesem Fall wird die Teilfläche mit den fahrzeugtypspezifischen Informationen beim Eintritt des Betätigungsobjekts in den Detektionsbereich nicht angezeigt. Erst beim Austritt wird die Teilfläche beispielsweise für ein bestimmtes Zeitintervall dargestellt, um dem Benutzer kurzzeitig die fahrzeugtypspezifischen Informationen zu vermitteln.

Bei einer Veränderung der Teilfläche mit den fahrzeugtypspezifischen Informationen, die sich bei einem Eintritt des Betätigungsobjekt in den Detektionsbereich oder bei einem Austritt des Betätigungsobjekts aus dem Detektionsbereich heraus ergeben kann, wird die Teilfläche insbesondere für eine gewisse Zeit vergrößert angezeigt, um den Nutzer auf die fahrzeugtypspezifischen Informationen aufmerksam zu machen.

Bei den fahrzeugtypspezifischen Informationen kann es sich beispielsweise um eine bestimmte Graphik, ein spezielles Bild oder einen Schriftzug handeln, welcher nur in Verbindung mit einem bestimmten Fahrzeugtyp verwendet wird. Diese fahrzeugtypspezifischen Informationen können insbesondere darauf hinweisen, dass das Fahrzeug einen elektrischen Antrieb für die Fortbewegung mit dem Fahrzeug aufweist.

Gemäß einer Ausgestaltung des erfindungsgemäßen Verfahrens wird die Teilfläche mit den fahrzeugtypspezifischen Informationen in dem zugehörigen Menü angezeigt, wenn erfasst worden ist, dass sich das Betätigungsobjekt im Detektionsbereich befindet. In einer solchen Situation kann auf eine Bedienabsicht des Nutzers geschlossen werden. In diesem Fall betrachtet der Nutzer zumindest zeitweise die Anzeigefläche. Durch die Anzeige der Teilfläche mit den fahrzeugtypspezifischen Informationen, die insbesondere in Verbindung mit allen Menüs der Menüstruktur angezeigt wird, wird dem Fahrer wiederkehrend eine besondere Visualisierung für den Typ des Fahrzeugs gegeben. Wenn sich das Betätigungsobjekt außerhalb des Detektionsbereichs befindet, kann darauf geschlossen werden, dass keine Bedienabsicht des Nutzers vorliegt. In diesem Fall wird die Teilfläche mit den fahrzeugtypspezifischen Informationen insbesondere nicht angezeigt, so dass eine größere Anzeigefläche für die Darstellung des aktuellen Menüs verbleibt. Hierdurch kann der Nutzer die Informationen des Menüs schneller und einfacher erfassen.

Bei dem erfindungsgemäßen Verfahren wird die Teilfläche mit den fahrzeugtypspezifischen Informationen in dem zugehörigen Menü für ein erstes Zeitintervall nach dem Eintritt des Betätigungsobjekts in den Detektionsbereich oder für ein zweites Zeitintervall nach dem Austritt des Betätigungsobjekts aus dem Detektionsbereich angezeigt. Die beiden Zeitintervalle dieser Alternativen können insbesondere identisch sein. Bei beiden Alternativen wird dem Nutzer in einer Situation, bei welcher eine Betätigung in Kürze durchgeführt werden wird, oder in der eine Betätigung soeben durchgeführt wurde, für ein Zeitintervall die Teilfläche mit den fahrzeugtypspezifischen Informationen angezeigt. Auf diese Weise wird der Nutzer kurzzeitig aber wiederkehrend auf den aktuellen Typ des Fahrzeugs aufmerksam gemacht.

Gemäß einer weiteren Ausgestaltung des erfindungsgemäßen Verfahrens ist der Detektionsbereich vor einer Eingabevorrichtung angeordnet. In diesem Fall wird bevorzugt nicht nur der Aufenthalt eines Betätigungsobjekts in dem Detektionsbereich sondern die Position des Betätigungsobjekts in dem Detektionsbereich erfasst. Die Teilfläche mit den fahrzeugtypspezifischen Informationen wird in diesem Fall nur dann in dem zugehörigen Menü angezeigt oder verändert, wenn erfasst worden ist, dass sich das Betätigungsobjekt an die Eingabevorrichtung annähert oder dass sich das Betätigungsobjekt von der Eingabevorrichtung entfernt. Hierdurch wird erreicht, dass noch genauer erfasst werden kann, ob eine Eingabeabsicht des Nutzers vorliegt oder die Eingabe eines Nutzers abgeschlossen ist.

Gemäß einer weiteren Ausgestaltung des erfindungsgemäßen Verfahrens wird in den Darstellungen aller Menüs die Teilfläche zur Anzeige der fahrzeugtypspezifischen Informationen angezeigt. In diesem Fall verändert sich die Art der Anzeige der fahrzeugtypspezifischen Informationen, wenn erfasst worden ist, dass das Betätigungsobjekt in den Detektionsbereich eintritt oder aus dem Detektionsbereich austritt. Beispielsweise kann sich die Farbe der Darstellung in der Teilfläche verändern. Ferner kann sich die Größe der Teilfläche verändern, insbesondere vergrößern. Hierdurch wird dem Nutzer die fahrzeugtypspezifische Information dauernd während der Anzeige der Menüs visualisiert. Wenn jedoch das Betätigungsobjekt in den Detektionsbereich eintritt oder aus dem Detektionsbereich austritt erfolgt eine noch deutlichere Hervorhebung der fahrzeugtypspezifischen Informationen.

Bei dem erfindungsgemäßen Verfahren werden ferner Eingaben für die Bedienvorrichtung erfasst. Wenn allerdings erfasst worden ist, dass innerhalb eines dritten Zeitintervalls keine Eingaben vorgenommen wurden, wird ein Bildschirmschoner angezeigt. Dieser Bildschirmschoner umfasst erfindungsgemäß die Anzeige der fahrzeugtypspezifischen Informationen. Wenn erfasst worden ist, dass sich das Betätigungsobjekt an die Eingabevorrichtung annähert, verschwindet der Bildschirmschoner wieder und ein Menü erscheint, bei dem gegebenenfalls die Teilfläche zur Anzeige der fahrzeugtypspezifischen Informationen dargestellt wird.

Gemäß einer weiteren Ausgestaltung des erfindungsgemäßen Verfahrens ist die Teilfläche ein Schaltelement des jeweils dargestellten Menüs der Menüstruktur. Bei einer Betätigung dieses Schaltelements werden dann die fahrzeugtypspezifischen Informationen oder weitere fahrzeugtypspezifische Informationen angezeigt. Bei dieser Ausgestaltung wird erreicht, dass in dem Menü durch das Schaltelement zwar der Hinweis auf fahrzeugtypspezifische Informationen enthalten ist. Erst bei Betätigung der Schaltelement werden jedoch die fahrzeugtypspezifischen Informationen vollständig angezeigt. In diesem Fall steht vorteilhafterweise eine größere Anzeigefläche für die Darstellung dieser Informationen zur Verfügung.

Unter einem *Schaltelement* wird im Sinne der Erfindung ein Steuerelement einer graphischen Benutzerschnittstelle verstanden. Ein Schaltelement unterscheidet sich von Elementen und Flächen zur reinen Informationsanzeige, so genannten Anzeigeelementen, darin, dass sie auswählbar sind. Bei einer Auswahl eines Schaltelements wird eine ihr zugeordnete Funktion ausgeführt. Die Funktion kann nur zu einer Veränderung der Informationsanzeige führen. Ferner können über die Schaltelemente Einrichtungen gesteuert werden, deren Bedienung von der Informationsanzeige unterstützt wird. Die Schaltelemente können somit herkömmliche mechanische Schalter ersetzen. Die Schaltelemente können beliebig für eine frei programmierbaren Anzeigefläche erzeugt und von dieser angezeigt werden. Des Weiteren kann vorgesehen sein, dass ein Schaltelement markiert werden kann. In diesem Fall wird die zugeordnete Funktion noch nicht ausgeführt. Das markierte Schaltelement wird jedoch gegenüber anderen Schaltelementen hervorgehoben dargestellt. Erst bei einer Auswahl des Schaltelements wird die ihr zugeordnete Funktion ausgeführt.

Bei dem Betätigungsobjekt, welches bei dem erfindungsgemäßen Verfahren verwendet wird, kann es sich beispielsweise um die Fingerspitze eines Nutzers, einen Betätigungsstift oder irgendein anderes Objekt handeln. Bei dem erfindungsgemäßen Verfahren wird insbesondere eine Anzeigefläche eingesetzt, auf welcher eine berührungsempfindliche Oberfläche ausgebildet ist. Es wird somit ein sogenannter Touchscreen verwendet.

Bei der erfindungsgemäßen Bedienvorrichtung sind mittels der Steuervorrichtung die Graphikdaten für die Darstellung der Menüs der Menüstruktur so erzeugbar , dass eine Teilfläche mit den fahrzeugtypspezifischen Informationen nur dann in dem zugehörigen Menü angezeigt oder verändert wird, wenn erfasst worden ist, dass das Betätigungsobjekt in den Detektionsbereich eintritt oder aus dem Detektionsbereich austritt. Die Bedienvorrichtung weist eine Eingabevorrichtung auf, mit welcher Eingaben für die Bedienvorrichtung erfassbar sind. Dabei ist mittels der Steuervorrichtung die Teilfläche mit den fahrzeugtypspezifischen Informationen in dem zugehörigen Menü für ein erstes Zeitintervall nach dem Eintritt des Betätigungsobjekts in den Detektionsbereich oder für ein zweites Zeitintervall nach dem Austritt des Betätigungsobjekt aus dem Detektionsbereich anzeigbar. Erfindungsgemäß ist mittels der Steuervorrichtung ein Bildschirmschoner anzeigbar, wenn erfasst worden ist, dass innerhalb eines dritten Zeitintervalls keine Eingaben vorgenommen wurden, wobei der Bildschirmschoner die Anzeige der fahrzeugtypspezifischen Informationen umfasst.

Die erfindungsgemäße Bedienvorrichtung ist insbesondere so ausgebildet, dass sie die vorstehend genannten Verfahrensschritte teilweise oder vollständig ausführen kann. Mittels der Bedienvorrichtung können verschiedene Einrichtungen des Fahrzeugs bedient werden. Die erfindungsgemäße Bedienvorrichtung weist dieselben vorstehend genannten Vorteile wie das erfindungsgemäße Verfahren auf.

Die Bedienvorrichtung weist insbesondere eine Eingabevorrichtung auf, vor welcher der Detektionsbereich angeordnet ist. Mittels der Annäherungserfassungseinrichtung ist in diesem Fall insbesondere die Position des Betätigungsobjekts in dem Detektionsbereich erfassbar. Die Eingabevorrichtung umfasst insbesondere eine berührungsempfindliche Oberfläche, die auf der Anzeigefläche angeordnet ist. Es wird somit ein sogenannter Touchscreen bereitgestellt.

Die Annäherungserfassungseinrichtung ist an sich bekannt. Sie kann beispielsweise eine Reflektionslichtschranke umfassen, die mindestens ein Leuchtmittel zum Emittieren von elektromagnetischer Detektionsstrahlung in den Detektionsbereich und ein Empfangselement zum Detektieren eines an dem Betätigungsobjekt gestreuten und/oder reflektierten Anteils der Detektionsstrahlung umfassen. Sie kann insbesondere so ausgebildet sein, das Betätigungsobjekt in dem Detektionsbereich anhand der Intensität der empfangenen Detektionsstrahlung zu erkennen. Die Annäherungserfassungseinrichtung kann ferner verschiedene Leuchtmittel für die einzelnen Detektionszonen umfassen, die jeweils elektromagnetische Detektionsstrahlung in die jeweilige Detektionszone emittieren. Ferner kann eine Modulationsvorrichtung zum Modulieren der emittierten Detektionsstrahlung vorgesehen sein, so dass sich die Detektionsstrahlung, die in die einzelnen Detektionszonen emittiert wird, jeweils hinsichtlich ihrer Modulation unterscheidet. In diesem Fall kann die Annäherungserfassungseinrichtung auch eine Analyseeinheit umfassen, die so ausgebildet ist, dass die empfangene reflektierte und/oder gestreute Detektionsstrahlung hinsichtlich ihrer Modulation analysiert werden kann, um zu ermitteln, in welcher Detektionszone die Detektionsstrahlung an einem Betätigungsobjekt gestreut oder reflektiert wurde.

Des Weiteren betrifft die Erfindung ein Fahrzeug mit der erfindungsgemäßen Bedienvorrichtung. Die Anzeigefläche ist in diesem Fall so angeordnet, dass sie gut von dem Fahrer und/oder dem Beifahrer erreicht werden kann. Beispielsweise ist die Anzeigefläche in der Mittelkonsole des Fahrzeugs angeordnet.

Die Erfindung wird nun anhand eines Ausführungsbeispiels mit Bezug zu den Zeichnungen erläutert.
- Figur 1: zeigt schematisch ein Ausführungsbeispiel der erfindungsgemäßen Bedienvorrichtung und die Verbindung dieser Bedienvorrichtung mit anderen Einrichtungen des Fahrzeugs,
- Figur 2: zeigt eine Schnittansicht der Anzeigevorrichtung des Ausführungsbeispiels der erfindungsgemäßen Bedienvorrichtung,
- Figur 3: zeigt ein Fahrzeug mit dem Ausführungsbeispiel der erfindungsgemäßen Bedienvorrichtung und
- die Figuren 4 bis 7: zeigen schematisch Anzeigen auf der Anzeigefläche der erfindungsgemäßen Bedienvorrichtung, die von einem Ausführungsbeispiel des erfindungsgemäßen Verfahrens erzeugt wurden.

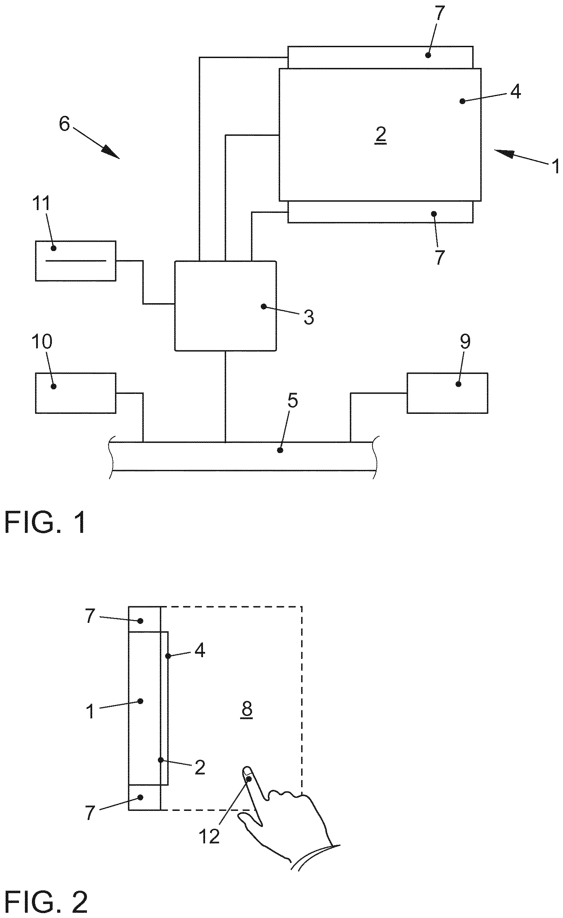

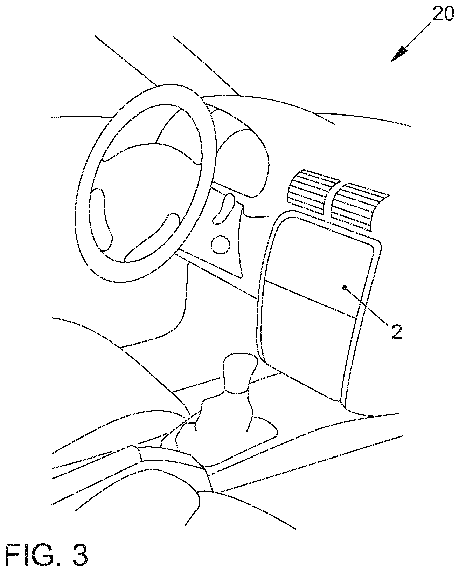

Mit Bezug zu den Figuren 1 bis 3 wird zunächst ein Ausführungsbeispiel der erfindungsgemäßen Bedienvorrichtung 6 und dessen Anordnung in einem Fahrzeug 20 erläutert:
Die Bedienvorrichtung 6 umfasst eine Anzeigevorrichtung 1 mit einer Anzeigefläche 2, die so im Innenraum des Fahrzeugs 20 angeordnet ist, dass sie für zumindest einen Fahrzeuginsassen, insbesondere den Fahrer, gut sichtbar ist. Die Anzeigefläche 2 kann von einem Display, insbesondere einem Flüssigkeitskristalldisplay, beliebiger Bauart bereitgestellt werden.

Die Bedienvorrichtung 6 umfasst ferner eine Steuervorrichtung 3 und eine Eingabevorrichtung 4. Die Steuervorrichtung 3 ist mit der Anzeigevorrichtung 1 verbunden. Mit der Steuervorrichtung 3 sind Graphikdaten zur Informationsdarstellung auf der Anzeigefläche 2 erzeugbar. Die Eingabevorrichtung ist als berührungsempfindliche Oberfläche 4 auf der Anzeigefläche 2 ausgebildet. Es wird somit ein sogenannter Touchscreen bereitgestellt.

Des Weiteren umfasst die Bedienvorrichtung 6 eine Annäherungserfassungseinrichtung 7. Mittels der Annäherungserfassungseinrichtung 7 kann der Aufenthalt und bevorzugt die Position eines Betätigungsobjekts 12 in einem Detektionsbereich 8 erfasst werden. Der Detektionsbereich 8 ist in Fig. 2 im Detail dargestellt. Der Detektionsbereich 8 ist so gebildet, dass eine Annäherung eines Betätigungsobjekts 12 an die berührungsempfindliche Oberfläche 4 auf der Anzeigefläche 2 erfasst wird.

In dem hier beschriebenen Ausführungsbeispiel bildet der Detektionsbereich 8 zumindest ein Volumen vor der Bedienoberfläche 4. Es ist insbesondere ein Quader gebildet, der mit seinen Seitenflächen in der Erstreckung, die parallel zu der berührungsempfindlichen Oberfläche 4 verläuft, die berührungsempfindliche Oberfläche 4 vollständig umschließt. In einer Richtung senkrecht zur berührungsempfindlichen Oberfläche 4 reicht der Quader von der berührungsempfindlichen Oberfläche 4 oder unmittelbar vor der berührungsempfindlichen Oberfläche 4 bis zu einem Abstand von z. B. etwa 40 cm. Der Abstand der äußeren Grenze des Detektionsbereichs 8 vor der berührungsempfindlichen Oberfläche 4 wird dabei so gewählt, dass eine Annäherung an die berührungsempfindliche Oberfläche 4 so rechtzeitig detektiert werden kann, dass die Anzeige auf der Anzeigefläche 2 früh genug verändert werden kann, um den Nutzer bei einer Eingabe zu unterstützen. Ferner sollte der Abstand des Detektionsbereichs 8 von der berührungsempfindlichen Oberfläche 4 so gewählt werden, dass das Betätigungsobjekt 12 oder ein anderes Objekt so selten wie möglich in den Detektionsbereich 8 bewegt wird, wenn keine Bedienung der berührungsempfindlichen Oberfläche 4 beabsichtigt ist.

Weitere Details zu verschiedenen Ausbildungen der Annäherungserfassungseinrichtung 7 sind beispielsweise in der WO 2011/051361 A1 beschrieben.

Die Annäherungserfassungseinrichtung 7 überträgt die aktuelle Position eines Betätigungsobjekts 12 im Detektionsbereich 8 fortwährend an die Steuervorrichtung 3. In Abhängigkeit von diesem Signal kann die Steuervorrichtung 3 die Anzeige auf der Anzeigefläche 2 verändern.

Die Steuervorrichtung 3 ist des Weiteren mit einem Speicher 11 verbunden. In dem Speicher 11 sind Daten zu einer hierarchischen Menüstruktur gespeichert, die in verschiedenen Ebenen Menüs aufweist. Die hierarchische Menüstruktur weist ein Hauptmenü auf, welches beim Einschalten der Bedienvorrichtung 6 bzw. beim Einschalten des Fahrzeugs 20 angezeigt wird. Dieses Hauptmenü umfasst mehrere Menüpunkte. Die Menüpunkte sind als Schaltelemente auf der Anzeigefläche 2 ausgebildet. Wird ein solches Schaltelement bestätigt, wird anschließend ein Untermenü, das heißt ein Menü einer hierarchisch niedrigeren Ebene angezeigt, welches jeweils wieder mehrere Menüpunkte umfassen kann. Ferner können in den Menüs oder nach der Betätigung eines Menüpunktes Informationen angezeigt werden, welche der Bedienung von Einrichtungen des Fahrzeugs dienen oder welche Zustände von Einrichtungen des Fahrzeugs anzeigen.

Um diese Anzeigen innerhalb der hierarchischen Menüstruktur zu erzeugen, ist die Steuervorrichtung 3 außerdem mit einem Datenbus 5 des Fahrzeugs 20 gekoppelt. Über diesen Datenbus 5 ist die Steuervorrichtung 3 mit weiteren Einrichtungen 9, 10 des Fahrzeugs 20 verbunden, zu denen Informationen auf der Anzeigefläche 2 angezeigt werden sollen oder die mittels der Bedienvorrichtung 6 bedient werden sollen. Mittels der Bedienvorrichtung 6 und durch das Verfahren können den Fahrzeuginsassen Informationen angezeigt werden. Ferner können die Fahrzeuginsassen mittels der Bedienvorrichtung 6 Einrichtungen 9, 10 des Fahrzeugs 20 bedienen und die Anzeige auf der Anzeigefläche 2 steuern.

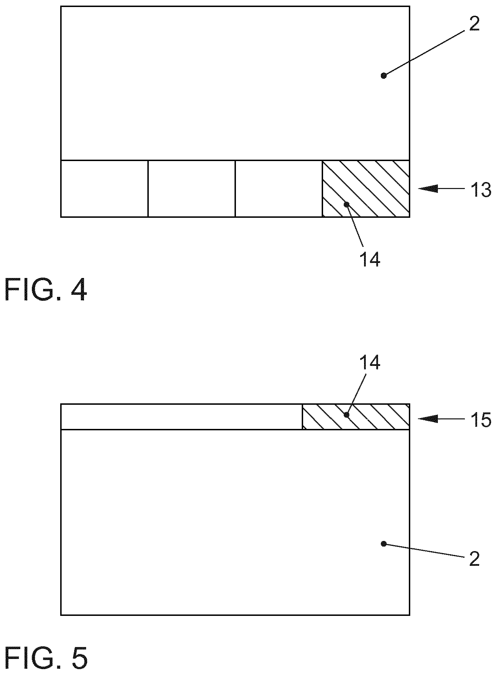

Bei dem erfindungsgemäßen Verfahren wird in Menüs der Menüstruktur eine Teilfläche 14 zur Anzeige von fahrzeugtypspezifischen Informationen dargestellt oder verändert dargestellt, wenn erfasst worden ist, dass ein Betätigungsobjekt 12 in den Detektionsbereich 8 eintritt oder aus dem Detektionsbereich 8 austritt. Im Folgenden werden verschiedene Beispiele mit Bezug zu den Figuren 4 bis 7 erläutert, wie diese Teilfläche 14 dargestellt werden kann:
Die Anzeige der Menüs der hierarchischen Menüstruktur, welche an sich bekannt ist, wird in den Figuren 4 bis 7 nicht dargestellt, um die Besonderheiten des erfindungsgemäßen Verfahrens klarer hervorzuheben.

In Figur 4 ist schematisch eine Anzeige auf der Anzeigefläche 2 gezeigt, bei welcher im unteren Teil der Anzeigefläche 2 ein Steuerbalken 13 angezeigt wird. Ein solcher Steuerbalken 13 wird bei einer Vielzahl von Menüs der hierarchischen Menüstruktur angezeigt. In diesem Steuerbalken 13 ist eine Teilfläche 14 reserviert, in welcher fahrzeugtypspezifische Informationen dargestellt werden. Die Art der Darstellung innerhalb der Teilfläche 14 ist insbesondere bei allen Menüs, die einen solchen Steuerbalken 13 umfassen, identisch. Es ergibt sich somit ein hoher Wiedererkennungseffekt für den Betrachter. Beispielsweise wird in der Teilfläche 14 ein Symbol für ein Fahrzeug mit einem elektrischen Antrieb angezeigt.

In Figur 5 ist ein weiteres Beispiel für eine Anzeige dargestellt, welche von dem erfindungsgemäßen Verfahren erzeugt wurde. In diesem Fall enthält das auf der Anzeigefläche 2 dargestellte Menü eine Statuszeile 15, die insbesondere im oberen Teil der Anzeigefläche 2 dargestellt wird. Innerhalb der hierarchischen Menüstruktur können eine Vielzahl von Menüs eine solche Statuszeile 15 enthalten. In dieser Statuszeile 15 ist eine Teilfläche 14 reserviert, die der Anzeige der fahrzeugtypspezifischen Informationen dienen, wie es bereits mit Bezug zu Figur 4 erläutert wurde.

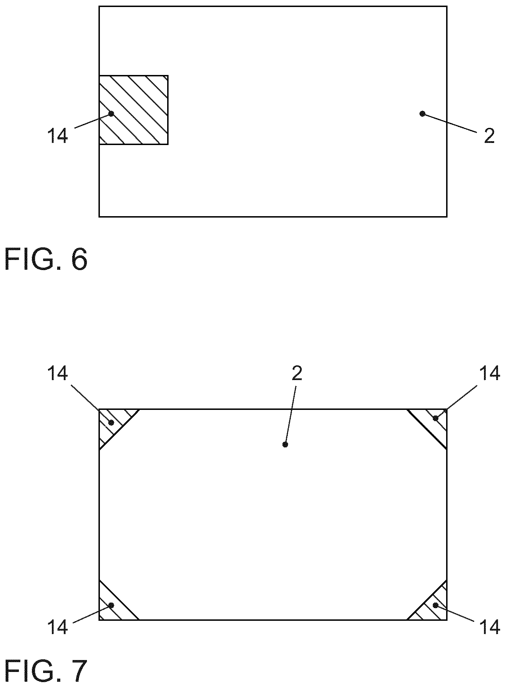

In Figur 6 ist eine weitere von dem erfindungsgemäßen Verfahren erzeugte Anzeige auf der Anzeigefläche 2 gezeigt. In diesem Fall ist in jedem der Menü der Menüstruktur eine Teilfläche 14 für die Darstellung fahrzeugtypspezifischer Informationen reserviert. Diese Teilfläche 14 wird jedoch frei auf der Anzeigefläche 2 innerhalb des jeweiligen Menüs platziert. Sie besitzt jedoch insbesondere immer dieselbe Größe, so dass sie leicht wiedererkannt werden kann.

Bei der in Figur 7 gezeigten Ausgestaltung ist bei den Ecken jedes Menüs der Menüstruktur die Teilfläche 14 für die Anzeige von fahrzeugtypspezifischen Informationen reserviert. Beispielsweise können die dreieckigen Teilflächen 14 in den Ecken der Anzeigefläche 2 eine bestimmte Farbe aufweisen, welche auf den Fahrzeugtyp hinweist.

Im Folgenden werden verschiedene Ausführungsbeispiele des erfindungsgemäßen Verfahrens, welches von der vorstehend beschriebenen Bedienvorrichtung 6 ausführbar ist, erläutert:
Bei einem ersten Ausführungsbeispiel wird die Teilfläche 14 zunächst bei der Darstellung eines Menüs nicht angezeigt. Wenn nun der Nutzer beispielsweise mit einer Fingerspitze 12 in den Detektionsbereich 8 eintritt, wird dies von der Annäherungserfassungseinrichtung 7 detektiert. Diese Einrichtung 7 überträgt ein entsprechendes Signal an die Steuervorrichtung 3. Die Steuervorrichtung 3 interpretiert dieses Signal als Bedienabsicht eines Benutzers. Daraufhin erzeugt die Steuervorrichtung 3 Graphikdaten für eine veränderte Anzeige des Menüs. Es wird die Teilfläche 14 in die Anzeige des Menüs integriert. Bei dem in Figur 7 gezeigten Beispiel erscheinen beispielsweise farbige Ecken. Bei dem in Figur 6 gezeigten Beispiel wird in einem Bereich der Anzeigefläche 2, bei dem in dem entsprechenden Menü Platz ist, die Teilfläche 14 angezeigt. In einer solchen Situation betrachtet der Nutzer normalerweise die Anzeigefläche 2 und wird daher auf die fahrzeugtypspezifischen Informationen aufmerksam.

Während sich die Fingerspitze 12 des Nutzers im Detektionsbereich 8 befindet und gegebenenfalls Eingaben auf der berührungsempfindlichen Oberfläche 4 vornimmt, wird die Teilfläche 14 auf der Anzeigefläche 2 angezeigt. Sobald erfasst wurde, dass sich die Fingerspitze 12 nicht mehr in dem Detektionsbereich 8 befindet, wird die Teilfläche 14 ausgeblendet, so dass für die Darstellung des aktuellen Menüs weiterer Platz auf der Anzeigefläche 2 zur Verfügung gestellt wird.

Gemäß einem zweiten Ausführungsbeispiel wird die Teilfläche 14 in die Menüs zunächst nicht dargestellt. Auch wenn der Nutzer mit einem Betätigungsobjekt 12 in den Detektionsbereich 8 eintritt, erfolgt keine Anzeige der Teilflächen 14. Wenn jedoch erfasst wurde, dass das Betätigungsobjekt 12, zum Beispiel die Fingerspitze des Nutzers, aus dem Detektionsbereich 8 austritt, wird die Anzeigefläche 2 wie vorstehend beschrieben für ein bestimmtes Zeitintervall von zum Beispiel 5 Sekunden in dem aktuellen Menü eingeblendet.

Gemäß einem dritten Ausführungsbeispiel wird die Teilfläche 14 wie beispielsweise in Figur 6 oder Figur 7 gezeigt immer in den Menüs angezeigt. Wenn ein Betätigungsobjekt 12 in den Detektionsbereich 8 eintritt, wird die Teilfläche 14 verändert dargestellt. Beispielsweise kann sich die Farbe der Darstellung bei der Teilfläche 14 oder die Transparenz der Darstellung verändern. Zusätzlich oder alternativ kann sich die Teilfläche 14 vergrößern. Wenn das Betätigungsobjekt 12 wieder aus dem Detektionsbereich 8 austritt, wird diese Veränderung wieder rückgängig gemacht.

Wenn die Bedienvorrichtung 6 innerhalb eines bestimmten Zeitintervalls, dessen Länge im Speicher 11 gespeichert ist, keine Eingaben erfasst werden, verschwindet die bisherige Anzeige und es wird ein Bildschirmschoner angezeigt. Dieser Bildschirmschoner umfasst die Anzeige von fahrzeugtypspezifischen Informationen. Wenn erfasst worden ist, dass ein Betätigungsobjekt 12 in den Detektionsbereich 8 eintritt, verschwindet der Bildschirmschoner wieder und ein Menü erscheint, bei dem die Teilfläche 14 dargestellt wird, welche die fahrzeugtypspezifischen Informationen auf andere Art darstellt.

Bei einem vierten Ausführungsbeispiel wird die Teilfläche 14 bei allen Menüs angezeigt. In diesem Fall erfolgt die Veränderung der Teilfläche 14 wie im dritten Ausführungsbeispiel beschrieben jedoch erst dann, wenn erfasst wurde, dass das Betätigungsobjekt 12 aus dem Detektionsbereich 8 austritt, und zwar für ein bestimmtes Zeitintervall von zum Beispiel 5 Sekunden.

Bei einem fünften Ausführungsbeispiel wird die Teilfläche 14 nur bei bestimmten Menüs der hierarchischen Menüstruktur angezeigt. Beispielsweise kann die Teilfläche 14 nur bei Menüs angezeigt werden, welche wie in Figur 4 gezeigt eine Steuerleiste 13 aufweisen, oder bei Menüs, die wie in Figur 5 gezeigt eine Statuszeile 15 aufweisen. In diesen Fällen ist die Teilfläche 14 als Schaltelement ausgebildet, auf welchem ein Symbol als fahrzeugtypspezifische Information dargestellt ist. Betätigt der Nutzer das Schaltelement der Teilfläche 14, indem er zum Beispiel dieses Schaltelement mit seiner Fingerspitze 12 berührt, wechselt die Anzeige auf der Anzeigefläche 2 gesteuert von der Steuervorrichtung 3 in einen Zustand, bei dem das vorherige Menü nicht mehr angezeigt wird und stattdessen nur noch fahrzeugtypspezifische Informationen angezeigt werden. Beispielsweise kann in diesem Fall ein spezielles Logo oder Bild oder ein Schriftzug auf der Anzeigefläche 2 erscheinen. Durch Betätigen eines weiteren Schaltelements oder nach Ablauf eines Zeitintervalls kann diese Anzeige wieder verschwinden, so dass das vorherige Menü mit der Teilfläche 14 angezeigt wird.

### BEZUGSZEICHENLISTE

- 1: Anzeigevorrichtung
- 2: Anzeigefläche
- 3: Steuervorrichtung
- 4: berührungsempfindliche Oberfläche, Eingabevorrichtung
- 5: Datenbus
- 6: Bedienvorrichtung
- 7: Annäherungserfassungseinrichtung
- 8: Detektionsbereich
- 9: Einrichtung des Fahrzeugs
- 10: Einrichtung des Fahrzeugs
- 11: Speicher
- 12: Betätigungsobjekt, Fingerspitze
- 13: Steuerleiste
- 14: Teilfläche
- 15: Statuszeile
- 20: Fahrzeug

## Patentansprüche

1. Verfahren zum Steuern einer Anzeigefläche (2) einer Bedienvorrichtung (6) in einem Fahrzeug (20), wobei in einem Speicher (11) Daten zu einer Menüstruktur gespeichert sind, die verschiedene Menüs aufweist, wobei bei dem Verfahren
der Aufenthalt eines Betätigungsobjekts (12) in einem Detektionsbereich (8) erfasst wird und die Menüs der Menüstruktur eine Teilfläche (14) zur Anzeige von fahrzeugtypspezifischen Informationen umfassen, wobei die Teilfläche (14) mit den fahrzeugtypspezifischen Informationen nur dann in dem zugehörigen Menü auf der Anzeigefläche (2) angezeigt oder verändert wird, wenn erfasst worden ist, dass das Betätigungsobjekt (12) in den Detektionsbereich (8) eintritt oder aus dem Detektionsbereich austritt,
**dadurch gekennzeichnet,**
**dass** die Teilfläche (14) mit den fahrzeugtypspezifischen Informationen in dem zugehörigen Menü für ein erstes Zeitintervall nach dem Eintritt des Betätigungsobjekts (12) in den Detektionsbereich (8) oder für ein zweites Zeitintervall nach dem Austritt des Betätigungsobjekt (12) aus dem Detektionsbereich (8) angezeigt wird, und
**dass** Eingaben für die Bedienvorrichtung (6) erfasst werden und ein Bildschirmschoner angezeigt wird, wenn erfasst worden ist, dass innerhalb eines dritten Zeitintervalls keine Eingaben vorgenommen wurden, und dass der Bildschirmschoner die Anzeige der fahrzeugtypspezifischen Informationen umfasst.

2. Verfahren nach Anspruch 1,
**dadurch gekennzeichnet,**
**dass** die Teilfläche (14) mit den fahrzeugtypspezifischen Informationen in dem zugehörigen Menü angezeigt wird, wenn erfasst worden ist, dass sich das Betätigungsobjekt (12) im Detektionsbereich (8) befindet.

3. Verfahren nach einem der vorhergehenden Ansprüche,
**dadurch gekennzeichnet,**
**dass** der Detektionsbereich (8) vor einer Eingabevorrichtung (4) angeordnet ist, dass die Position des Betätigungsobjekts (12) in den Detektionsbereich (8) erfasst wird und dass die Teilfläche (14) mit den fahrzeugtypspezifischen Informationen nur dann in dem zugehörigen Menü angezeigt oder verändert wird, wenn erfasst worden ist, dass sich das Betätigungsobjekt (12) an die Eingabevorrichtung (4) annähert oder dass sich das Betätigungsobjekt (12) von der Eingabevorrichtung entfernt.

4. Verfahren nach Anspruch 1,
**dadurch gekennzeichnet,**
**dass** in den Darstellungen aller Menüs die Teilfläche zur Anzeige der fahrzeugtypspezifischen Informationen angezeigt wird und dass sich die Art der Anzeige der fahrzeugtypspezifischen Informationen verändert, wenn erfasst worden ist, dass das Betätigungsobjekt (12) in den Detektionsbereich (8) eintritt und/oder aus dem Detektionsbereich (8) austritt.

5. Verfahren nach einem der vorhergehenden Ansprüche,
**dadurch gekennzeichnet,**
**dass** die Teilfläche (14) ein Schaltelement des jeweils dargestellten Menüs der Menüstruktur ist und dass bei einer Betätigung des Schaltelements die oder weitere fahrzeugtypspezifischen Informationen angezeigt werden.

6. Bedienvorrichtung (6) in einem Fahrzeug (20) mit
- einer Anzeigefläche (2),
- einem Speicher (11), in dem Daten zu einer Menüstruktur gespeichert sind, die verschiedene Menüs aufweist,
- einer Steuervorrichtung (3), die mit dem Speicher (11) und der Anzeigefläche (2) gekoppelt ist und mittels welcher Graphikdaten zur Anzeige auf der Anzeigefläche (2) erzeugbar sind,
- einer Annäherungserfassungseinrichtung (7) zum Erfassen des Aufenthalts eines Betätigungsobjekts (12) in einem Detektionsbereich (8) und
- einer Eingabevorrichtung (4), mit welcher Eingaben für die Bedienvorrichtung (6) erfassbar sind, wobei
- mittels der Steuervorrichtung (3) die Graphikdaten für die Darstellung der Menüs der Menüstruktur so erzeugbar sind, dass eine Teilfläche (14) mit fahrzeugtypspezifischen Informationen nur dann in dem zugehörigen Menü angezeigt oder verändert wird, wenn erfasst worden ist, dass ein Betätigungsobjekt (12) in den Detektionsbereich (8) eintritt oder aus dem Detektionsbereich (8) austritt,
**dadurch gekennzeichnet,**
- **dass** mittels der Steuervorrichtung (3) die Teilfläche (14) mit den fahrzeugtypspezifischen Informationen in dem zugehörigen Menü für ein erstes Zeitintervall nach dem Eintritt des Betätigungsobjekts (12) in den Detektionsbereich (8) oder für ein zweites Zeitintervall nach dem Austritt des Betätigungsobjekt (12) aus dem Detektionsbereich (8) anzeigbar ist, und
- **dass** mittels der Steuervorrichtung (3) ein Bildschirmschoner anzeigbar ist, wenn erfasst worden ist, dass innerhalb eines dritten Zeitintervalls keine Eingaben vorgenommen wurden, wobei der Bildschirmschoner die Anzeige der fahrzeugtypspezifischen Informationen umfasst.

7. Bedienvorrichtung (6) nach Anspruch 6,
**dadurch gekennzeichnet,**
**dass** vor der Eingabevorrichtung (4)der Detektionsbereich (8) angeordnet ist, und dass mittels der Annäherungserfassungseinrichtung (7) die Position des Betätigungsobjekts (12) in dem Detektionsbereich (8) erfassbar ist.

8. Bedienvorrichtung (6) nach Anspruch 7,
**dadurch gekennzeichnet,**
**dass** die Eingabevorrichtung eine berührungsempfindliche Oberfläche (4) umfasst, die auf der Anzeigefläche (2) angeordnet ist.

## Claims

1. Method for controlling a display surface (2) of an operator control device (6) in a vehicle (20), wherein data regarding a menu structure are stored in a storage device (11), said menu structure comprising various menus, wherein in the method
the length of time an actuating object (12) is in a detection region (8) is detected and the menus of the menu structure comprise a part surface (14) for displaying vehicle-type-specific information, wherein the part surface (14) having the vehicle-type-specific information is only then displayed or changed in the associated menu on the display surface (2) if it has been detected that the actuating object (12) is entering the detection region (8) or is exiting the detection region,
**characterized in that**
the part surface (14) having the vehicle-type-specific information is displayed in the associated menu for a first time interval after the actuating object (12) enters the detection region (8) or for a second time interval after the actuating object (12) exits the detection region (8), and that inputs for the operator control device (6) are detected and a screensaver is displayed if it has been detected that no inputs have been performed within a third time interval and that the screensaver comprises the display of the vehicle-type-specific information.

2. Method according to Claim 1,
**characterized in that**
the part surface (14) having the vehicle-type-specific information is displayed in the associated menu if it has been detected that the actuating object (12) is located in the detection region (8).

3. Method according to either of the preceding claims,
**characterized in that**
the detection range (8) is arranged in front of an input device (4) in such a manner that the position of the actuating object (12) in the detection range (8) is detected and that the part surface (14) having the vehicle-type-specific information is only then displayed or changed in the associated menu if it has been detected that the actuating object (12) is approaching the input device (4) or that the actuating object (12) is at a distance from the input device.

4. Method according to Claim 1,
**characterized in that**
the part surface for displaying the vehicle-type-specific information is displayed in the displays of all the menus and that the type of the display of the vehicle-type-specific information changes if it has been detected that the actuating object (12) is entering the detection region (8) and/or is exiting the detection region (8).

5. Method according to any one of the preceding claims,
**characterized in that**
the part surface (14) is a switching element of the respectively displayed menu of the menu structure and that the individual or further vehicle-type-specific information is displayed when the switching element is actuated.

6. Operator control device (6) in a vehicle (20) having
- a display surface (2),
- a storage device (11), in which data regarding a menu structure that comprises various menus are stored,
- a control device (3) that is coupled to the storage device (11) and to the display surface (2) and by means of said control device graphic data can be generated for displaying on the display surface (2),
- a proximity detecting device (7) for detecting the length of time an actuating object (12) is in a detection region (8), and
an input device (4), using which inputs for the operator control device (6) can be detected wherein,
- the graphic data for displaying the menus of the menu structure can by generated by means of the control device (3) in such a manner that a part surface (14) having vehicle-type-specific information is only then displayed or changed in the associated menu if it has been detected that an actuating object (12) is entering the detection region (8) or is exiting the detection region (8),
**characterized in that**
- by means of the control device (3) the part surface (14) having the vehicle-type-specific information can be displayed in the associated menu for a first time interval after the actuating object (12) enters the detection region (8) or for a second time interval after the actuating object (12) exits the detection region (8), and
- By means of the control device (3) a screensaver can be displayed if it has been detected that no inputs have been performed within a third time interval, wherein the screensaver comprises the display of the vehicle-type-specific information.

7. Operator control device (6) according to Claim 6, **characterized in that**
the detection range (8) is arranged in front of the input device (4), and that the position of the actuating object (12) can be detected in the detection region (8) by means of the proximity detecting device (7) .

8. Operator control device (6) according to Claim 7, **characterized in that**
the input device comprises a touch-sensitive surface (4) that is arranged on the display surface (2).

## Revendications

1. Procédé pour contrôler une surface d'affichage (2) d'un système de commande (6) dans un véhicule (20), des données à propos d'une structure de menus qui présente différents menus étant enregistrées dans une mémoire (11), lors du procédé
le séjour d'un objet d'actionnement (12) dans une zone de détection (8) étant détecté et les menus de la structure de menus comportant une surface partielle (14) destinée à afficher des informations spécifiques au type de véhicule, la surface partielle (14) avec les informations spécifiques au type de véhicule n'étant affichée ou modifiée dans le menu associé sur la surface d'affichage (2) que s'il a été détecté que l'objet d'actionnement (12) pénètre dans la zone de détection (8) ou sort de la zone de détection,
**caractérisé en ce**
**que** la surface partielle (14) avec les informations spécifiques au type de véhicule est affichée dans le menu associé pendant un premier intervalle de temps après la pénétration de l'objet d'actionnement (12) dans la zone de détection (8) ou pendant un deuxième intervalle de temps après la sortie de l'objet d'actionnement (12) de la zone de détection (8), et
**que** des saisies pour le système de commande (6) sont détectées et un économiseur d'écran est affiché lorsqu'il a été détecté qu'aucune saisie n'a eu lieu à l'intérieur d'un troisième intervalle de temps, et en ce que l'économiseur d'écran comprend les informations spécifiques au type de véhicule.

2. Procédé selon la revendication 1, **caractérisé en ce que** la surface partielle (14) avec les informations spécifiques au type de véhicule est affichée dans le menu associé lorsqu'il a été détecté que l'objet d'actionnement (12) se trouve dans la zone de détection (8) .

3. Procédé selon l'une des revendications précédentes, **caractérisé en ce que** la zone de détection (8) est disposée devant un système de saisie (4), **en ce que** la position de l'objet d'actionnement (12) dans la zone de détection (8) est détectée et **en ce que** la surface partielle (14) avec les informations spécifiques au type de véhicule n'est affichée dans le menu associé que lorsqu'il a été détecté que l'objet d'actionnement (12) s'approche du système de saisie (4) ou que l'objet d'actionnement (12) s'éloigne du système de saisie.

4. Procédé selon la revendication 1, **caractérisé en ce que** dans les représentations de tous les menus, la surface partielle destinée à afficher les informations spécifiques au type de véhicule est affichée et **en ce que** la nature de l'affichage des informations spécifiques au type de véhicule change lorsqu'il a été détecté que l'objet d'actionnement (12) pénètre dans la zone de détection (8) et/ou sort de la zone de détection (8).

5. Procédé selon l'une des revendications précédentes, **caractérisé en ce que** la surface partielle (14) est un élément de commutation du menu respectivement affiché de la structure de menus et **en ce que** lesdites ou d'autres informations spécifiques au type de véhicule sont affichées lors d'un actionnement de l'élément de commutation.

6. Système de commande (6) dans un véhicule (20), comprenant
- une surface d'affichage (2),
- une mémoire (11) dans laquelle sont enregistrées des données à propos d'une structure de menus qui présente différents menus,
- un système de contrôle (3) qui est connecté à la mémoire (11) et à la surface d'affichage (2) et au moyen duquel peuvent être générées des données graphiques destinées à être affichées sur la surface d'affichage (2),
- un dispositif de détection d'approche (7) destiné à détecter le séjour d'un objet d'actionnement (12) dans une zone de détection (8) et
- un système de saisie (4) avec lequel peuvent être détectées des saisies pour le système de commande (6),
- les données graphiques pour la représentation des menus de la structure de menus pouvant être générées au moyen du système de contrôle (3) de telle sorte qu'une surface partielle (14) avec des informations spécifiques au type de véhicule n'est affichée ou modifiée dans le menu associé que s'il a été détecté qu'un objet d'actionnement (12) pénètre dans la zone de détection (8) ou sort de la zone de détection (8),
**caractérisé en ce**
- **que** la surface partielle (14) avec les informations spécifiques au type de véhicule est affichée dans le menu associé au moyen du système de contrôle (3) pendant un premier intervalle de temps après la pénétration de l'objet d'actionnement (12) dans la zone de détection (8) ou pendant un deuxième intervalle de temps après la sortie de l'objet d'actionnement (12) de la zone de détection (8), et
- **qu'**un économiseur d'écran peut être affiché au moyen du système de contrôle (3) lorsqu'il a été détecté qu'aucune saisie n'a eu lieu à l'intérieur d'un troisième intervalle de temps, l'économiseur d'écran comprenant les informations spécifiques au type de véhicule.

7. Système de commande (6) selon la revendication 6, **caractérisé en ce que** la zone de détection (8) est disposée devant le système de saisie (4), **en ce que** la position de l'objet d'actionnement (12) dans la zone de détection (8) est détectée au moyen du dispositif de détection d'approche (7).

8. Système de commande (6) selon la revendication 7, **caractérisé en ce que** le système de saisie comporte une surface tactile (4) sur laquelle est disposée la surface d'affichage (2).
